# EUROPEAN PATENT APPLICATION

(11) **EP 3 882 530 A1**
(43) Date of publication of application: **22.09.2021**
(21) Application number: 20164338.4
(22) Date of filing: 19.03.2020
(51) Int. Cl.: F24F 6/14, B05B 3/02, B05B 3/06, F24F 3/16

(54) **A NEBULIZER BLADE**

(71) Applicant: Technisch bureau Van Belle, 8500 Kortrijk (BE)
(72) Inventor: SAVIC, Mirko, 8930 Lauwe (BE)
(74) Representative: IP HILLS NV

(57) **Abstract**

There is disclosed a nebulizer blade (20) comprising at least one nebulizing nozzles (24) mounted directly on the nebulizer blade (20) between the hub end (21) and the tip end (23), the at least one nebulizing nozzles (24) configured to generate a fluid jet with suitable fluid droplets for suppression of dust and/or cooling. The nebulizer blade (20) comprises an internal fluid channel (22) that is in fluid communication with the at least one nebulizing nozzles (24). There is further disclosed a fan comprising such nebulizer blades (20) and a dust suppression and/or cooling apparatus (1) comprising such a fan (10).

## Description

### FIELD OF THE INVENTION

The present invention relates to nebulizers in general, and in particular to the use of nebulizers in dust suppression systems and cooling arrangements.

### BACKGROUND OF THE INVENTION

In the fields of construction and demolition works, or at other basic industrial sites which make use of large machinery such as excavating equipment, shredders, etc. a significant amount of dust, debris and other small particles and contaminates are generated and introduced into the surrounding air. In order to provide a safe working environment for the workers, limit the environmental impact, as well as inhibit any damage done to the equipment or structures, it is important to limit the amount of dust released into the atmosphere. One common practice used to suppress dust released in the surrounding air is to make use of a nebulizer apparatus that nebulizes a jet of water droplets on particular areas of the construction or industrial site. In order for the nebulizer to be effective in the capture of dust particles the droplets of the nebulized water jet must be sufficiently small, and the jet of water droplets can be referred to as a mist. Such dust suppressing nebulizer apparatus can thus also be referred to as misting dust suppressors. In addition to and/or in place of the application of dust suppression such nebulizers are also in use for cooling applications in which the droplets of the mist cool the environment in which they are released. In order to increase the areas covered by such nebulizer apparatus, use is made of fans which provide for an air flow that spreads the water droplets ejected by the nebulizing nozzle over a larger area.

Currently there are several dust suppression and/or cooling apparatus that include nebulizer fans, otherwise known as water fans, that are fans equipped with a fan for providing airflow and a nozzle for ejecting fluid droplets, typically water droplets. The fan is driven by an actuator, typically a rotary motor. Typically, the motor is an electric motor. However, in the currently known nebulizer fans, the nozzle or nozzles of the nebulizer are placed next to and before the hub of the bladed rotor of the fan so as to release the water droplets into the airstream generated by the blades and not to interfere with the blades of the rotor during rotation. Such an arrangement of the nozzle of the nebulizer is, however, not optimal, as it requires both an electrical power supply for the actuator of the fan and a supply of water for the nozzles. The nozzles and their supply lines also need to be provided in the flow of the airstream generated by the fan, thereby obstructing and interfering with the generated airstream.

A further known embodiment of a nebulizer which comprises a fan for providing an airflow and a nozzle for ejecting fluid droplets, typically water droplets, is for example described in FR2858395A1. In FR2858395, there is described the possibility to drive the motor of the fan with a pressurized fluid, or in other words the motor is a turbine driven by the pressurized fluid. This pressurized fluid, typically water, is also the fluid that is subsequently fed to a nozzle in the central hub of the fan, where the pressurized fluid is ejected in the form of droplets, that are subsequently carried along with the air flow generated by the fan. However, it is clear that the airflow generated by the fan is not efficiently used for increasing the distance over which the fluid jet is transported as only a tiny portion of the airflow generated by the fan impacts the fluid jet.

A further embodiment of a dust suppression systems is for example known from US2011/0139005A1 and comprises an air purifier employing a water jet-type fan system having a simple structure, in which water is pumped by a water pump and sprayed and scattered by the water jet-type fan system in which a plurality of spray nozzles are mounted on a fan having a flow channel, in order to purify contaminants. The fan system rotates by the reaction force resulting from the water jet ejected by the nozzles on the tip of the blades. The air purifier by means of the blades sucks in air for performing an air purification process. In this way the air purifier provides for an air circulation function by means of the blades of the fan, while at the same time nebulizing water so that the water droplets are able to capture dust particles in the air purifier. It is clear that as the reaction force of the water jet exiting the nozzles drives the fan, no actuator, such as a rotary motor or a turbine is required. However, it is clear that the fluid jet is expelled in the opposite direction of the airflow generated by the fan which limits the distance along which the fluid jet can travel.

There thus remains a need for a dust suppression and/or cooling apparatus that provides an efficient and easy way to suppress dust and/or to provide cooling of the atmosphere. Preferably such an apparatus is able to expel a fluid jet uniformly over a large distance. The apparatus preferably would be capable of covering a large area over a large distance more uniformly and simplifying the installation and operation of the apparatus in remote areas or construction sites and provides for a safe operation in explosion sensitive areas.

### SUMMARY OF THE INVENTION

According to aspects of the invention there is provided a nebulizer blade, a fan and a dust suppression and/or cooling apparatus that is simple, efficient and able to cover a large area over a larger distance in a more uniform way, and is for example able to operate in explosion sensitive areas.

According to a first aspect there is provided a nebulizer blade for use with a fan for use with a dust suppression and/or cooling apparatus, wherein:
- the nebulizer blade extends longitudinally along a longitudinal blade axis:
   ∘ from a hub end of the nebulizer blade configured to be mounted to a centre hub of the fan;
   ∘ to a tip end configured to form the distal radial end of the nebulizer blade when mounted to the centre hub of the fan; and
- the nebulizer blade comprises at least one nebulizing nozzles mounted directly on the nebulizer blade between the hub end and the tip end, the at least one nebulizing nozzles configured to generate a fluid jet with suitable fluid droplets for suppression of dust and/or cooling; and
- the nebulizer blade comprises an internal fluid channel that is in fluid communication with the at least one nebulizing nozzles.

According to an embodiment, there is provided a nebulizer blade, wherein the internal fluid channel and at least the part of the nebulizer blade adjacent the internal fluid channel, together, form a single-piece structure of the same material.

According to an embodiment, there is provided a nebulizer blade wherein:
- the thickness of the part of the nebulizer blade adjacent the internal fluid channel is 80% or more of the diameter of the internal fluid channel; and/or
- 50% or more of the circumference of the internal fluid channel is integrated into and/or enclosed by the nebulizer blade.

According to an embodiment, there is provided a nebulizer blade, wherein the nebulizer blade comprises a plurality of nebulizing nozzles at different positions along the longitudinal blade axis between the hub end and the tip end.

According to an embodiment, there is provided a nebulizer blade, wherein the plurality of nebulizing nozzles are positioned and/or configured such that the fluid jets of adjacent nebulizing nozzles overlap at a predetermined maximum distance from the longitudinal blade axis.

According to an embodiment, there is provided a nebulizer blade, wherein:
- a blade length corresponds to the distance between the hub end and the tip end of the nebulizer blade along the longitudinal blade axis;
- a blade width corresponds to the maximum distance between a leading edge and a trailing edge of the nebulizer blade along a direction transverse to the longitudinal blade axis;
- at the predetermined maximum distance from the longitudinal blade axis the cross section of the overlapping fluid jets of the nebulizer nozzles extends over a distance, along the direction of the longitudinal blade axis, which overlaps over 50% or more with the distance covered by the blade length.

According to an embodiment, there is provided a nebulizer blade, wherein:
- the predetermined maximum distance is in the range of 50% or less of the blade length; and/or
- the predetermined maximum distance is in the range of 200% or less of the blade width.

According to a second aspect, there is provided a fan for use with a dust suppression and/or cooling apparatus, the fan comprising at least one of said nebulizer blades according to the first aspect, wherein the fan further comprises:
- a frame structure arranged to be fixed to a support;
- a rotor supported rotatably by the frame structure for rotation around a central axis of rotation and comprising a centre hub and a plurality of blades attached to the centre hub of which at least one of said nebulizer blades;
- a central fluid supply channel within the centre hub;
- said at least one nebulizer blade being configured such that:
   - said internal fluid channel is in fluid communication with the central fluid supply channel; and
   - said at least one nebulizing nozzles are mounted at an angle with respect to a plane defined by a longitudinal axis of the respective blade on which the nebulizing nozzle is mounted and the central axis of rotation of the fan, such that said nebulizer blades are driven for rotation around the central axis of rotation by a reaction force of the fluid jet that exits said at least one nebulizing nozzles; and
   - when rotated by said at least one nebulizing nozzles, said at least one nebulizer blades generate an airflow that flows, with reference to the direction of the central axis of rotation, in the same direction as the fluid jet expelled by said at least one nebulizing nozzles.

According to an embodiment there is provided a fan, wherein said rotor comprises a plurality of said nebulizer blades; and/or said nebulizer blades comprise a plurality of said nebulizer nozzles.

According to an embodiment there is provided a fan, wherein said nebulizer nozzles of said nebulizer blades are configured such that the average direction of the fluid jet is at a nozzle pitch angle with respect to a plane transverse to the central axis of rotation of the rotor of the fan that is equal to or larger than the blade pitch angle of the chord of said nebulizer blades with respect to said plane transverse to the central axis of rotation of the rotor.

According to an embodiment, there is provided a fan, wherein the fan is operable by connecting with a suitable source of pressurized liquid, such as preferably water.

According to an embodiment there is provided a fan, wherein the central fluid supply channel is couplable to a pressurised fluid supply conduit in such a way that the rotor of the fan can rotate with respect to the fluid supply conduit.

According to a third aspect, there is provided a dust suppression and/or cooling apparatus, the dust suppression and/or cooling apparatus comprising said fan according to the second aspect, wherein the dust suppression and/or cooling apparatus further comprises a support to which the frame structure of the fan is fixed.

According to an embodiment, there is provided a dust suppression and/or cooling apparatus, wherein the dust suppression and/or cooling apparatus further comprises a pressurised fluid supply conduit coupled to the central fluid supply channel by means of a suitable coupling and/or sealing that allow for axial rotation of the central fluid supply channel.

According to an embodiment, there is provided a dust suppression and/or cooling apparatus, wherein the nebulizer apparatus further comprises a source of pressurized liquid and in which the fan is coupled to the source of pressurized liquid by means of the pressurized fluid supply conduit.

In this way there is provided a nebulizer blade, a fan and a dust suppression and/or cooling apparatus that is able to cover a large area over a large distance, and which is able to operate in explosion sensitive areas as there is no need for an electrical power supply, and that simplifies the installation and operation of the apparatus in remote areas or construction sites as only a supply of pressurized fluid, such as water is required. In this way the blade, fan and apparatus are also simplified and can operate efficiently without the need for a separate actuator and only requiring a suitable source of pressurized liquid, such as water. Since the airflow generated is in the same direction as the fluid jet expelled and since the internal fluid channel reduces the disturbance of the airflow generated by the blades, the distance along which the fluid jet can travel and its uniform distribution are improved.

### BRIEF DESCRIPTION OF THE DRAWINGS

Elements in the figures have not necessarily been drawn to scale in order to enhance their clarity and improve understanding of these various elements and embodiments of the invention. Furthermore, elements that are known to be common and well understood to those in the industry are not depicted in order to provide a clear view of the various embodiments, thus the drawings are generalized in form in the interest of clarity and conciseness.
FIG. 1 shows a schematic cross-sectional view of an embodiment of a fan for use with a dust suppression and/or cooling apparatus comprising nebulizer blades with nebulizing nozzles;
FIG. 2 schematically shows the direction of the airflow and the fluid jet generated by the embodiment of the fan of FIG. 1;
FIG. 3 shows a schematic front view of the embodiment of the fan of FIG. 1;
FIG. 4 shows a schematic side view of a blade and a nozzle of the embodiment of the fan of FIG. 1;
FIG. 5 schematically shows a dust suppression and/or cooling apparatus making use of an embodiment of the fan of FIG. 1;
FIG. 6 and FIG. 7 show different perspective views of an alternative embodiment of blades with nebulizing nozzles for use with a fan for a dust suppression and/or cooling apparatus similar as in FIG. 1 - 5;
FIG. 8 shows a front view of the embodiment of the blades and fan of FIG. 6 and FIG. 7;
FIG. 9 shows a side view of the embodiment of blades and fan of FIG. 6 and FIG. 7;
FIG. 10 shows a section of an embodiment of a blade along line X-X in FIG. 8; and
Figure 11 shows a side view of an alternative embodiment of blades and fan.

### DETAILED DESCRIPTION

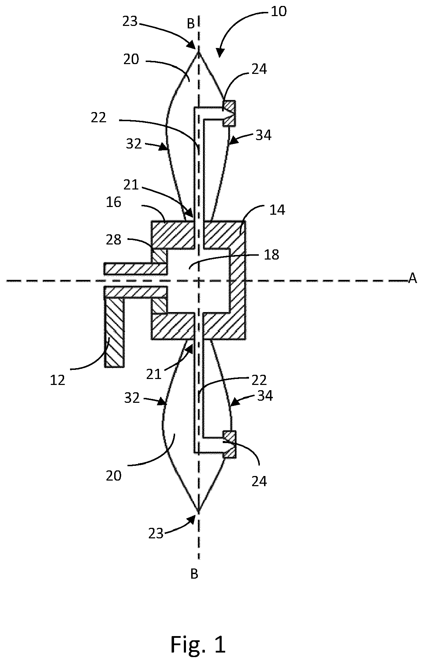

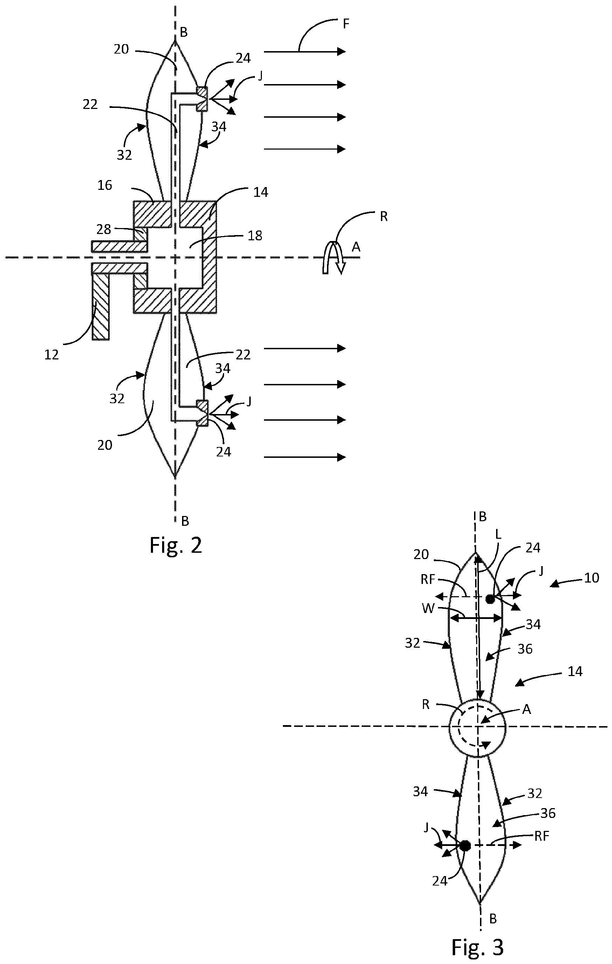

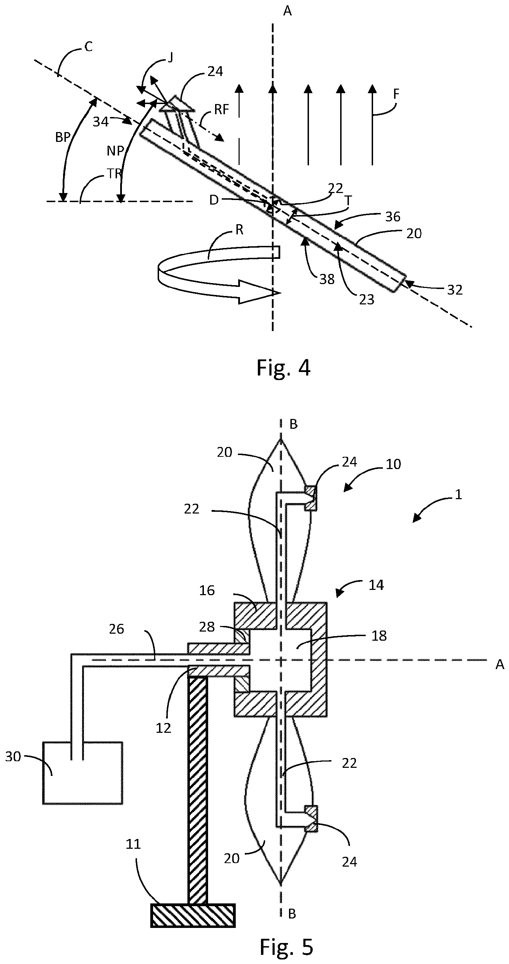

Referring to the embodiment of FIG. 1, a schematic simplified partial cross-sectional view of an embodiment of a fan (10) for use with a dust suppression and/or cooling apparatus (1) also referred to as a dust suppression and/or cooling apparatus (1), is shown. The view of FIG. 1 and similarly FIG. 2 and FIG. 5, is a simplified view, in which particularly with respect to the nebulizer blades 20 of the fan (10) only the outline of the contours of these nebulizer blades (20) and the internal fluid conduit (22) is schematically shown, as will be described in further detail below. The embodiment of the fan (10) comprises a frame structure (12) arranged to be fixed to a support (11) as schematically shown in FIG. 5. The embodiment of the fan further comprises a rotor (14) supported rotatably by the frame structure (12) for rotation around a central axis of rotation (A). As shown, the rotor (14) comprises a centre hub (16) and a central fluid supply channel (18) is arranged within the centre hub (16). As further shown, the rotor (14) further comprises a plurality of nebulizer blades (20) attached to the centre hub (16). The central fluid supply channel (18), according to the embodiment shown, for example extends along the central axis of rotation (A) of the rotor (14) within the centre hub (16).

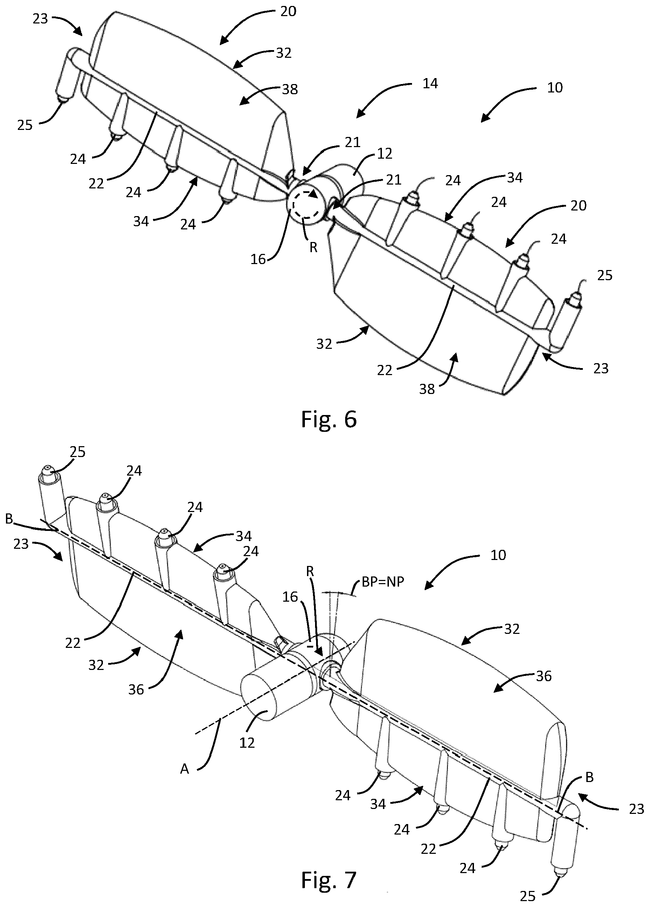

The embodiment of the fan (10) further comprises a plurality of blades (20) attached to the centre hub (16) of the rotor (14). As shown, each of the blades (20) extends longitudinally along a longitudinal blade axis (B). This means that the blade extends along this longitudinal blade axis (B) from a hub end (21) to a tip end (23). It is clear that this hub end (21) is mounted to the centre hub (16) of the fan (10) and that the tip end (23) forms the distal radial end of the blade (20) when mounted to the centre hub (16) of the fan (10). According to the embodiment shown, the fan comprises two nebulizer blades (20), each comprising a nebulizing nozzle 24 mounted directly on the nebulizing blade (20) as will be explained in further detail below. However, it is clear that alternative embodiments, for example comprising a rotor with one or more nebulizer blades (20) optionally combined with one or more blades without nebulizing nozzles are possible. Such as for example a rotor comprising three, four, five, etc. nebulizer blades (20). It is further clear that, as will be explained in further detail below, alternative embodiments of the nebulizer blade (20) could comprise a different number of nebulizing nozzles (24). According to such embodiments, the nebulizer blade could for example comprise any suitable plurality, such as two, three, four, five, etc. of nebulizing nozzles (24) directly mounted on the nebulizer blade (20). According to the embodiment shown in FIG. 1, each of the plurality of nebulizer blades (20) comprises an internal fluid channel (22) that is in fluid communication with the nebulizing nozzle (24) of the respective nebulizer blade (20) and the central fluid supply channel (18) of the centre hub (16) of the rotor (14) of the fan (10). It is clear that the embodiment of the fan (10) shown in FIG. 1, in this way, comprises an embodiment of a rotor (14) comprising two nebulizer blades (20), each comprising a single nebulizing nozzle (24), however as will be explained below, for example with reference to FIG. 6, alternative embodiments are possible in which the rotor (14) comprises a suitable plurality of nebulizer blades (20), each comprising a suitable plurality of nebulizing nozzles (24). According to the embodiment shown in FIG. 1, the nebulizing nozzles (24) are mounted directly on the respective nebulizer blades (20) between a hub end and a tip end (23) of the nebulizer blade (20). As shown schematically in FIG. 1, each nebulizer blade (20) extends longitudinally along a longitudinal blade axis (B) from a hub end (21) to a tip end (23). It is clear that, as shown, the hub end (21) of the nebulizer blade (20) is mounted to a centre hub (16) of the fan (10) and that the tip end (23) forms the distal radial end of the nebulizer blade (20) when mounted to the centre hub (16) of the fan (10).

It is clear that, as schematically shown in FIG.1, and for example further clarified by means of FIG. 4, that, according to the embodiment shown, the internal fluid channel (22) of the nebulizer blade (20), thus forms an internal element of the nebulizer blade (20). According to the embodiment shown in FIG. 1 and FIG. 4, this means that the internal fluid channel (22) is completely integrated into the material of the nebulizer blade (20). In this way the interference of the internal fluid channel (22) on the airflow generated by the nebulizer blade (20) is minimized. Preferably the internal fluid channel (22) is formed as a suitable channel (22) that is manufactured inside the material of the nebulizer blade (20), or in other words, the nebulizer blade (20) and the internal fluid channel (22) together form a single-piece structure of the same material. According to such embodiments the internal fluid channel (22) could for example be manufactured by for example suitable boring or alternative milling operations creating the cavity for the internal fluid channel (22) internally in the material of the nebulizer blade (20), thereby forming a single-piece structure. Alternatively, the nebulizer blade (20) could be manufactured comprising the internal fluid channel (22) by means of a suitable moulding or 3D printing manufacturing operation. It is clear that alternative embodiments are possible in which for example the nebulizer blade comprises multiple pieces, and/or the internal fluid channel (22) is provided internally by inserting a suitable conduit internally into the nebulizer blade (20). According to preferred embodiments, however, the internal fluid channel (22) and at least the part of the nebulizer blade (20) adjacent the internal fluid channel (22), together, form a single-piece structure of the same material.

As further shown, in the view of FIG. 4, which shows a side view of the nebulizer blade (20) along the direction of its longitudinal axis (B), it is clear that according to such an embodiment the thickness (T) of the part of the nebulizer blade (20) adjacent the internal fluid channel (22) is larger than the diameter (D) of the internal fluid channel (22). However, as will be described in further detail below with reference to the embodiment of Figure 6, alternative embodiments are possible in which the thickness (T) is equal to or lower than the diameter (D) of the internal fluid channel (22), however preferably the thickness (T) of the part of the nebulizer blade (20) adjacent the internal fluid channel (22) is 80% or more of the diameter (D) of the internal fluid channel (22).

According to the embodiment shown in FIG. 1, it is clear that the circumference of the internal fluid channel (22) is entirely integrated into, or in other words, entirely enclosed by the nebulizer blade (20). However, as will be described in further detail below with reference to the embodiment of Figure 6, alternative embodiments are possible in which the internal fluid channel (22) is only partly integrated into the nebulizer blade (20), and for example partly protrudes from the nebulizer blade (20). However, preferably, according to such embodiments 50% or more of the circumference of the internal fluid channel (22) is integrated into and/or enclosed by the nebulizer blade (20) as this reduces the impact of the internal fluid channel (22) on the airflow generated by the nebulizer blade (20).

As shown in FIG. 1 to 4, it is clear that with respect to the direction of rotation (R) of the rotor (14) of the fan (10), it is clear, as known to a person skilled in the art that the blades (20) extend width-wise between a leading edge (32) and a trailing edge (34). As most clearly shown in FIG. 3, the blade width (W) of the nebulizer blade (20) corresponds to the maximum distance between the leading edge (32) and the trailing edge (34) of the nebulizer blade (20) along a direction transverse to the longitudinal blade axis (B). As further shown in FIG. 3, the nebulizer blade 20 comprises a blade length (L), which corresponds to the distance between the hub end (21) and the tip end (23) of the nebulizer blade (20) along the longitudinal blade axis (B). Finally, as for example most clearly shown in FIG. 4, the nebulizer blade (20) comprises, with respect to the direction of the airflow (F) generated by the rotor (14) of the fan (10) a leading blade surface (36) as well as a trailing blade surface (38) at an opposing side of the nebulizer blade (20) with respect to the direction of the component of the airflow along the direction of the central axis of rotation (A) of the fan (10). It is clear that according to the embodiment shown in FIG. 1 -5 that the nebulizing nozzle (24) is directly mounted on and/or projects from the leading blade surface 36. Additionally, according to this embodiment, or alternative embodiments, such as for example described below, it is clear that the nebulizing nozzles (24) are mounted at adjacent, near or at, the trailing edge (34), with respect to the longitudinal axis (B) of the nebulizer blade (20). As further shown, it is clear that according to such embodiments, the internal fluid channel (22) in addition to its main channel, which extends substantially along the direction of the longitudinal blade axis (B), further comprises one or more parts that extend from this longitudinal part along the longitudinal blade axis (B) towards the position of the nebulizing nozzle (24). It is clear that, as shown, this longitudinal part of the internal fluid channel (22) has a length that is larger than the parts of the internal fluid channel (22) extending between this longitudinal part and the nebulizing nozzle (24).

In other words, it is clear that, in the embodiment such as for example shown in the view of FIG. 3, the nebulizing nozzle (24) of the nebulizer blade (20) is mounted in such a way that the direction of the reaction force (RF) forms an angle with respect to a plane defined by a longitudinal axis (B) of the respective blade (20) on which the nebulizing nozzle (24) is mounted and the central axis of rotation (A) of the fan (10), when viewed along the direction of the central axis of ration (A). As shown, according to the embodiment of FIG. 3, in the view of FIG. 3, this means the angle of the average or central direction (J) of the fluid jet with respect to the longitudinal blade axis (B), which, according to this embodiment shown, is for example 90°. However, it is clear that alternative embodiments are possible in which this angle is in the range of 90° +/-60°, preferably 90° +/- 45°, more preferably 90° +/- 15°, for example 90° +/- 5°. It is thus clear, that as the nebulizing nozzles 24 are mounted eccentrically of the central rotation axis (A) this will result in the tangential component of the reaction force (RF) rotating the nebulizer blade (20) and the rotor (14) of the fan (10) around the central rotation axis (A) according to the direction of rotation.

As shown for example in the embodiment of FIG. 1 to 4, the nebulizing nozzles (24) are configured as atomizer nozzles to generate a fluid jet with an average direction (J) with suitable air droplets for suppression of dust and/or for cooling, which is also configured such that the nebulizer blades (20) are driven by a reaction force (RF) of the fluid jet that exits the nebulizing nozzles (24). It is clear that, as shown, such nebulizer nozzles (24) generate a fluid jet, typically a spray of atomized liquid, which at the exit of the nebulizer nozzle (24) produces a diverging fluid jet as schematically indicated with the arrows, and which in the context of this description will be referred to as the fluid cone, although this fluid cone does not necessarily needs to be entirely conical in shape, it is used to denote the expanding fluid jet or spray from the exit of the nebulizing nozzle (24) onward. By means of the reaction force (RF) generated by the fluid jet from the nebulizing nozzles (24), the nebulizer blades (20) of the rotor (14) of the fan (10) will start to rotate around the central axis of rotation (A) as schematically shown with the arrow (R) in FIG. 2, 3 and 4, without the need for an actuator, and the fan (10) can be operated by connecting it only with a suitable source of pressurized liquid, such as water. This simplifies the installation and operation of the fan (10) in remote areas or construction sites and provides for safety in explosion sensitive areas as no electric actuators are needed at the location where the fan of the apparatus is installed.

As further shown, the plurality of blades (20) of the fan (10) when rotated by the plurality of nebulizing nozzles (24) generate an airflow (F) with at least a component that flows along the central axis of direction (A) of the fan (10) and, when seen along the direction of the central axis (A), in the same direction as the component along the direction of the central axis (A) of the average direction (J) of the fluid jet expelled by the plurality of nebulizing nozzles (24) as shown in FIG. 2. This means that both the average direction (J) of the fluid jet of the nebulizing nozzles (24) and the airflow (F) of the nebulizer blades (20) when rotated by the reaction force of the nebulizing nozzles (24), when seen along the direction of the central axis (A), will flow both in the same direction away from the nebulizer blades (20) of the fan (10). For example, in the view shown in Figure 2, this means that both the fluid jet and the air flow, will flow to the right when seen along the direction of the central axis (A). As shown in the view of FIG. 4, it is clear that this means, upward, in a direction away from the leading blade surface (36) of the nebulizer blade (20). In other words, the movement component along the central rotation axis (A) of the average direction of the flow of both the airflow and the fluid jet, along the direction of the central axis (A), points in the same direction. As the plurality of nebulizing nozzles (24) rotate with the plurality of blades (20), they provide for a uniform distribution of the fluid jet along the entire of the airflow generated and the fan (10) is thus able to cover a larger area in a more uniform way.

FIG. 3 illustrates a schematic front view of the preferred embodiment of the rotor (14) of the fan (10). It is clear that the plurality of nebulizer blades (20) are provided with a suitable shape and angle with respect to a plane transverse to the central axis of rotation (A) of the fan (10), such that, when rotated by the reaction force of the plurality of nebulizing nozzles (24), each of the plurality of nebulizer blades (20) generates an airflow with a component along the central axis of rotation (A) in the same direction as the component along the central axis of rotation (A) of the average direction (J) of the expelled fluid jet from the nebulizing nozzles (24). Each of the plurality of nebulizer blades (20) are preferably shaped and/or positioned in such a way that, when rotated around the central axis of rotation (A) by reaction force (F) of the fluid jet exiting the plurality of nebulizing nozzles (24), they will generate an airflow that has a component that flows along the same direction along the central axis of rotation (A) of the fan (10) as the axial component of the fluid jet expelled by the plurality of nebulizing nozzles (24). In this way, the airflow will enable the nebulized or atomized fluid jet to spread over a larger distance.

Referring to FIG. 4, a schematic side view of one of the plurality of nebulizer blades (20) and its nebulizing nozzles (24) are shown, viewed along the direction of the longitudinal blade axis (B) of the nebulizer blade (20). It is clear, as shown in FIG. 4, that the nebulizing nozzle (24) is arranged directly on the nebulizer blade (20) and receives fluid from the internal fluid channel (22) for generating a fluid jet with an average direction (J). As shown, the nebulizing nozzle (24) of the nebulizer blade (20) is configured such that the average direction (J) of the fluid jet is at a nozzle pitch angle (NP) with respect to a plane (TR) transverse to the central axis of rotation (A) of the rotor (14) of the fan (10) that is equal to the blade pitch angle (BP) of the chord (C) of the nebulizer blade (20) with respect to said plane (TR) transverse to the central axis of rotation (A) of the rotor (14). It is clear that alternative embodiments are possible, in which for example the nozzle pitch angle (NP) is larger than the blade pitch angle (BP). The blade pitch angle (BP) is for example in the range of 5° up to and including 45°, preferably in the range of 5° up to and including 20°. The nozzle pitch angle (NP) is for example in the range of 5° up to and including 60°, for example in the range of 5° up to and including 45°.

It is thus clear that, in this way, the reaction force (RF) generated by the fluid jet of the nebulizing nozzle (24) comprises an axial component in the direction of the central axis of rotation (A) of the rotor (14) of the fan (10), which causes the fluid jet to be ejected in the same direction as the generated airflow with respect to the central axis of rotation (A). As described above, it is clear that the reaction force (RF) further also comprises a tangential component, which is tangential with respect to the direction of the central axis of rotation (A). The tangential component of the reaction force (RF) generated by the fluid jet of the nebulizing nozzles (24) is responsible for rotating the rotor (24) with the nebulizer blade (20) such that, the nebulizer blade (20) generates an airflow (F) along the same direction as the axial component of the reaction force (RF).

FIG. 5 is a schematic illustration of an embodiment of a dust suppression and/or cooling apparatus (1) employing an embodiment of the fan (10) similar as described above. The embodiment of the dust suppression and/or cooling apparatus (1) comprises the fan (10), a pressurised fluid supply conduit (26) coupled to the central fluid supply channel (18) of the fan (10), and a pressurized fluid reservoir (30). The pressurized fluid, such as for example a pressurized water flow, can be provided to the nebulizing nozzles (24) on the nebulizing blades (20) by means of the internal fluid channels (22) that are coupled to the central fluid supply channel (18) in the rotor (14) of the fan (10). As shown, the central fluid supply channel (18) is then coupled to the fluid supply conduit (26) in such a way that the rotor (14) of the fan (10) can rotate with respect to the fluid supply conduit (26). This can, for example, be realized by means of a suitable coupling and/or sealing means (28) that allows for axial rotation but seals against the outflow of the pressurized fluid. The coupling and/or sealing means (28) can for example comprise a suitable bearing with a suitable fluid-tight sealing.

FIG 6 - 8 shows an alternative embodiment of a fan (10) comprising a rotor (14) with a plurality of nebulizer blades (20), similar to the embodiment described above. Similar elements have been referenced by means of similar references and function in a similar way as described above. Different from the embodiments shown in FIG. 1 - 5, the embodiment of the nebulizer blade (20) of which the embodiment of the rotor (14) shown in FIG. 6 and 7 comprises two nebulizer blades (20). Each nebulizer blade (20) comprises a plurality of nebulizing nozzles (24) mounted directly on the nebulizer blade (20). According to the embodiment shown, the embodiment of the nebulizer blade (20) comprises three nebulizing nozzles (24) mounted between the hub end (21) and the tip end (23). Optionally, as shown, according to this embodiment, the embodiment of the nebulizer blade (20) further comprises a further nebulizing nozzle (25) mounted to the nebulizer blade (20) at a radial position beyond the tip end (23). It is clear that alternative embodiments are possible of the nebulizer blade (20) without such a further nebulizing nozzle (25), however, such a further nebulizing nozzle (25) mounted at a larger radial distance from the axis of rotation (A) than the tip end (23) of the nebulizer blades (20) can be advantageous as the reaction force of this nozzle is able to generate a larger torque, which is especially advantageous during the start-up of the rotation of the rotor (14) of the fan (10). It is clear that also according to this embodiment, the nebulizer blade (20) comprises an internal fluid channel (22) that is in fluid communication with the plurality of nebulizing nozzles (24) mounted thereon, and optionally also with the at least one further nebulizing nozzle (25)

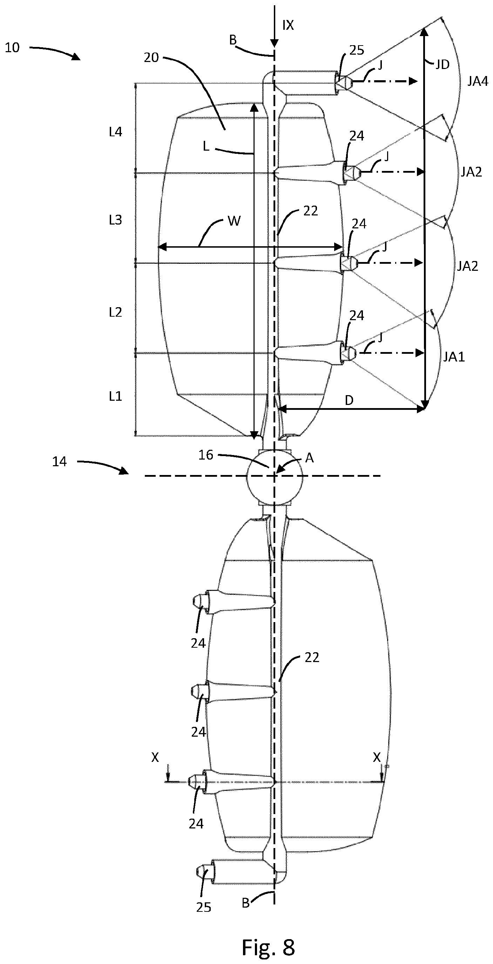

. It is clear that alternative embodiments are possible in which a different number of nebulizing nozzles (24) is mounted on a nebulizer blade (20). Still further alternative embodiments are possible in which the rotor comprises a different number of nebulizer blades (20) than the two nebulizer blades (20) according to the embodiment shown. According to the embodiment shown, it is clear that the nebulizing nozzles (24) extend from the trailing end (34) of the nebulizer blade (20). Although according to this embodiment, such as for example shown in the front view of FIG. 8, the plurality of nebulizing nozzles (24) on the nebulizer blade (20) and the further nebulizing nozzle (25) are evenly spaced (L1, L2, L3, L4) along the longitudinal blade axis (B), it is clear that alternative embodiments are possible in which the nebulizing nozzles (24, 25) are positioned differently at different positions along the longitudinal blade axis (B) between the hub end (21) and the tip end (23) on the nebulizer blade (20), or optionally beyond the tip end (23) in any suitable way. As more clearly shown in Figure 8, preferably, the plurality of nebulizing nozzles (24) of the nebulizer vane (20) are positioned and/or configured such that the fluid jets of adjacent nebulizing nozzles (24) overlap at a predetermined maximum distance (D) from the longitudinal blade axis (B). As shown in Figure 8, this can be realized by means of a suitable choice of the spacing (L1, L2, L3, L4) of the nebulizer nozzles (24) along the longitudinal blade axis (B) and/or a suitable choice of the angle (JA1, JA2, JA3, JA4) of expansion of the diverging fluid jet exiting the nebulizer nozzles (24) in the plane transverse to the central rotation axis (A). This angle (JA1, JA2, JA3, JA4) can be set by means of a suitable choice of nebulizing nozzle (24) and can be seen as the angle of the fluid cone as described above. In this way, as shown in Figure 8, it is clear that, at the predetermined maximum distance (D) from the longitudinal blade axis (B), the cross section of the overlapping fluid jets of the nebulizer nozzles (24, 25) extends over a distance (JD), along the direction of the longitudinal blade axis (B). According to the embodiment shown, along the longitudinal blade axis (B) the distance (JD) of the cross section of the overlapping fluid jets, overlaps about 90% or more of the distance covered by the blade length (L). However it is clear that alternative embodiments are possible in which preferably this distance (JD) overlaps over 50% or more with the distance covered by the blade length (L), as this ensures a good and uniform distribution of the fluid jet along the airflow generated by the rotor (14) of the fan (10). Preferably the maximum distance D is small enough so that the fluid jet is dispersed in the airflow generated by the blade as close to the nebulizer blade as possible, as this allows for a good mixture of the airflow and the droplets of the fluid jets. According to the embodiment shown, the maximum distance (D) is for example 40% of the blade length (L) and 80% of the blade width (W), however it is clear that alternative embodiments are possible, in which for example the predetermined maximum distance (D) is in the range of in the range of 50% or less of the blade length (L) and/or 200% or less of the blade width (W).

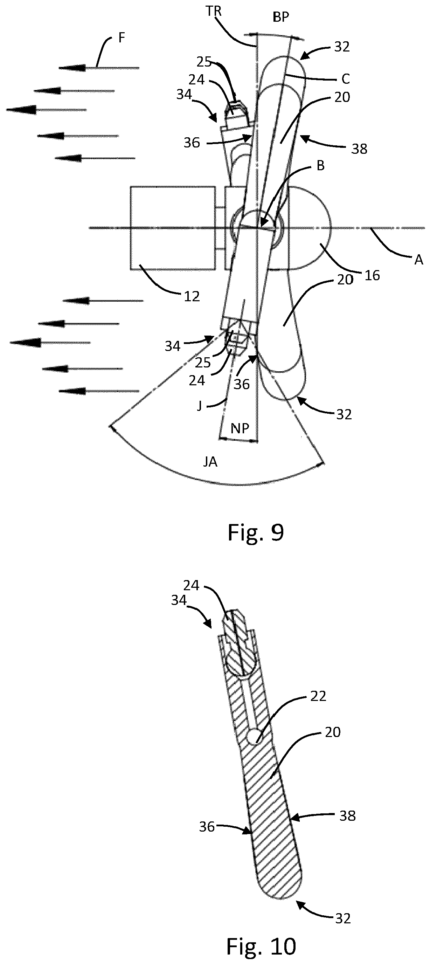

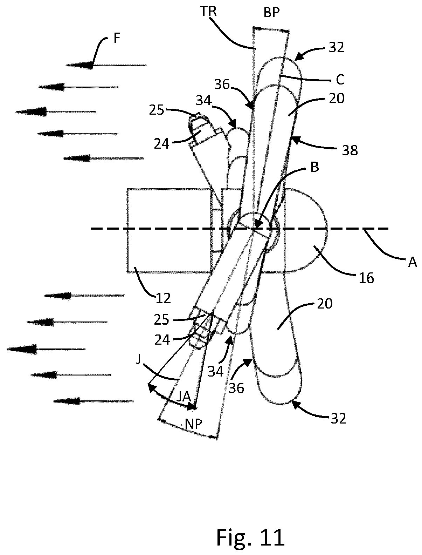

FIG. 9 shows a side view of the nebulizer blades (20) of the rotor (14) of the embodiment of FIG. 6-8 along the arrow IX in FIG. 8. Similar as described above, it is clear that the nozzle pitch (NP) is substantially equal to the blade pitch (BP). As further shown, the angle (JA) of expansion of the diverging fluid jet exiting the nebulizer nozzles (24) in the plane transverse to the central blade axis (B). This angle (JA) could, as shown, be chosen to be similar to the angle (JA1-JA4) in the plane transverse to the central rotation axis (A) as described above, however, according to alternative embodiments, any suitable angle (JA) that differs from (JA1-JA4) could be chosen by means of a selection of any suitable nebulizing nozzle (24) comprising such different angles in different planes. FIG. 10 shows a cross section along line X-X of the embodiment of FIG. 8, which shows the internal fluid channel (22) and the part of it extending towards the nebulizing nozzle 24 of the nebulizer vane (20) in further detail. According to the embodiment shown, it is clear that, similar as described above, the diameter of the internal fluid channel (22) is smaller than the thickness of the blade (20). Finally, FIG. 11 shows a similar side view of an embodiment similar to that of FIG. 9, which differs from the embodiment of FIG. 9 in that in the embodiment of FIG. 11 the nozzle pitch (NP) differs from the blade pitch (BP). As shown according to this embodiment the nozzle pitch (NP) is larger than the blade pitch (BP).

According to a preferred embodiment of the apparatus for dust suppression and/or cooling , the droplet size of the fluid jet generated by the plurality of nebulizing nozzles (24) of the nebulizer blades (20) is preferably in the range of 5µm to 500µm, more specifically in the range of 10µm to 200µm. Preferably the fluid is water or comprises as its main fluid component water. It is however clear that alternative embodiments are possible, in which for example water droplets with other sizes could be useful for other applications. In order to generate a sufficiently large reaction force (RF) from the nebulizing nozzles (24) of the nebulizer blades (20) to rotate the rotor (14), it is important that the pressure in the fluid provided to the plurality of nebulizing nozzles (24) of the nebulizer blades (20) is sufficiently large, for example in the range of 60 bars to 80 bars or higher.

The flow rate of the fluid provided to the plurality of nebulizing nozzles (24) of the nebulizer blades (20) that drive the rotor (14) of the fan (10) is preferably sufficiently large to generate a sufficiently large reaction force (RF) from the fluid jet exiting the nebulizing nozzles (24), which typically have a rather small opening for generating the required water droplets. The flow rate of the fluid is 0.5 ℓ/min or larger, more specifically 1 ℓ/min or larger, for example in the range of 1 ℓ/min to 100 ℓ/min, and for example in the range of 1 ℓ/min to 50 ℓ/min. The combination of the pressure and the flow rate of the fluid provided via the internal fluid channel (22) to the at least one nebulizing nozzles (24) on the nebulizer blades (20) of the fan (10) and the nozzle pitch angle (NP) of nebulizing nozzles (24) should be chosen such that a rotational speed of the fan (10) of at least 200 rpm, preferably at least 500 rpm, or more specifically 800 rpm can be achieved.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above..

## Claims

1. A nebulizer blade (20) for use with a fan (10) for use with a dust suppression and/or cooling apparatus (1), wherein:
- the nebulizer blade (20) extends longitudinally along a longitudinal blade axis (B):
∘ from a hub end (21) of the nebulizer blade (20) configured to be mounted to a centre hub (16) of the fan (10);
∘ to a tip end (23) configured to form the distal radial end of the nebulizer blade (20) when mounted to the centre hub (16) of the fan (10); and
- the nebulizer blade (20) comprises at least one nebulizing nozzles (24) mounted directly on the nebulizer blade (20) between the hub end (21) and the tip end (23), the at least one nebulizing nozzles (24) configured to generate a fluid jet with suitable fluid droplets for suppression of dust and/or cooling; and
- the nebulizer blade (20) comprises an internal fluid channel (22) that is in fluid communication with the at least one nebulizing nozzles (24).

2. The nebulizer blade (20) according to claim 1, wherein the internal fluid channel (22) and at least the part of the nebulizer blade (20) adjacent the internal fluid channel (22), together, form a single-piece structure of the same material.

3. The nebulizer blade (20) according to claim 1 or 2, wherein:
- the thickness (T) of the part of the nebulizer blade (20) adjacent the internal fluid channel (22) is 80% or more of the diameter (D) of the internal fluid channel (22); and/or
- 50% or more of the circumference of the internal fluid channel (22) is integrated into and/or enclosed by the nebulizer blade (20).

4. The nebulizer blade (20) according to any of the preceding claims, wherein the nebulizer blade (20) comprises a plurality of nebulizing nozzles (24) at different positions along the longitudinal blade axis (B) between the hub end (21) and the tip end (23).

5. The nebulizer blade (20) according to claim 4, wherein the plurality of nebulizing nozzles (24, 25) are positioned and/or configured such that the fluid jets of adjacent nebulizing nozzles (24) overlap at a predetermined maximum distance (D) from the longitudinal blade axis (B).

6. The nebulizer blade (20) according to claim 5, wherein:
- a blade length (L) corresponds to the distance between the hub end (21) and the tip end (23) of the nebulizer blade (20) along the longitudinal blade axis (B);
- a blade width (W) corresponds to the maximum distance between a leading edge (32) and a trailing edge (34) of the nebulizer blade (20) along a direction transverse to the longitudinal blade axis (B);
- at the predetermined maximum distance (D) from the longitudinal blade axis (B) the cross section of the overlapping fluid jets of the nebulizer nozzles (24, 25) extends over a distance (JD), along the direction of the longitudinal blade axis (B), which overlaps over 50% or more with the distance covered by the blade length (L).

7. The nebulizer blade according to claim 6, wherein:
- the predetermined maximum distance (D) is in the range of 50% or less of the blade length (L); and/or
- the predetermined maximum distance (D) is in the range of 200% or less of the blade width (W).

8. A fan (10) for use with a dust suppression and/or cooling apparatus (1), the fan (10) comprising at least one of said nebulizer blades (20) according to any of the preceding claims, wherein the fan (10) further comprises:
- a frame structure (12) arranged to be fixed to a support;
- a rotor (14) supported rotatably by the frame structure (12) for rotation around a central axis of rotation (A) and comprising a centre hub (16) and a plurality of blades attached to the centre hub (16) of which at least one of said nebulizer blades (20);
- a central fluid supply channel (18) within the centre hub (16);
- said at least one nebulizer blade (20) being configured such that:
- said internal fluid channel (22) is in fluid communication with the central fluid supply channel (18); and
- said at least one nebulizing nozzles (24) are mounted at an angle with respect to a plane defined by a longitudinal axis (B) of the respective blade (20) on which the nebulizing nozzle (24) is mounted and the central axis of rotation (A) of the fan (10), such that said nebulizer blades (20) are driven for rotation around the central axis of rotation (A) by a reaction force of the fluid jet that exits said at least one nebulizing nozzles (24); and
- when rotated by said at least one nebulizing nozzles (24), said at least one nebulizer blades (20) generate an airflow that flows, with reference to the direction of the central axis of rotation (A), in the same direction as the fluid jet expelled by said at least one nebulizing nozzles (24).

9. The fan (10) according to claim 8, wherein said rotor (14) comprises a plurality of said nebulizer blades (20); and/or said nebulizer blades (20) comprise a plurality of said nebulizer nozzles (24).

10. The fan according to claim 8 or 9, wherein said nebulizer nozzles (24) of said nebulizer blades (20) are configured such that the average direction (J) of the fluid jet is at a nozzle pitch angle (NP) with respect to a plane (TR) transverse to the central axis of rotation (A) of the rotor (14) of the fan (10) that is equal to or larger than the blade pitch angle (BP) of the chord (C) of said nebulizer blades (20) with respect to said plane (TR) transverse to the central axis of rotation (A) of the rotor (14).

11. The fan (10) according to any of the claims 8 to 10, wherein the fan (10) is operable by connecting with a suitable source (30) of pressurized liquid, such as preferably water.

12. The fan (10) according to any of the claims 8 to 11, wherein the central fluid supply channel (18) is couplable to a pressurised fluid supply conduit (26) in such a way that the rotor (14) of the fan (10) can rotate with respect to the pressurised fluid supply conduit (26).

13. A dust suppression and/or cooling apparatus (1) comprising said fan (10) according to any of the claims 8 to 12, wherein the dust suppression and/or cooling apparatus (1) further comprises a support (11) to which the frame structure (12) of the fan (10) is fixed.

14. The dust suppression and/or cooling apparatus (1) according to claim 13, wherein the dust suppression and/or cooling apparatus (1) further comprises a pressurised fluid supply conduit (26) coupled to the central fluid supply channel (18) by means of a suitable coupling and/or sealing (28) that allow for axial rotation of the central fluid supply channel (18).

15. The dust suppression and/or cooling apparatus (1) according to claim 13 or 14, wherein the nebulizer apparatus (1) further comprises a source of pressurized liquid (30) and in which the fan (10) is coupled to the source of pressurized liquid (30) by means of the pressurized fluid supply conduit (26).
